# EUROPÄISCHE PATENTSCHRIFT

(11) **EP 2 245 298 B1**
(45) Veröffentlichungstag und Bekanntmachung des Hinweises auf die Patenterteilung: **05.10.2011**
(21) Anmeldenummer: 09708604.5
(22) Anmeldetag: 31.01.2009
(51) Int. Cl.: F03B 13/14, F03B 13/22

(54) **ROTORBLATTGESTALTUNG FÜR EINE WELLSTURBINE**
ROTOR BLADE DESIGN FOR A WELLS TURBINE
CONFIGURATION D'UNE AUBE DE ROTOR POUR UNE TURBINE WELLS

(30) Priorität: 04.02.2008 DE 102008007616
(43) Veröffentlichungstag der Anmeldung: 03.11.2010
(73) Patentinhaber: Voith Patent GmbH, 89522 Heidenheim (DE); Universität Siegen, 57068 Siegen (DE)
(72) Erfinder: ARLITT, Raphael, 89077 Ulm (DE); CAROLUS, Thomas, 57250 Netphen (DE); TEASE, Ken, IV1 1SY Inverness (GB)
(74) Vertreter: Dr. Weitzel & Partner
(86) Internationale Anmeldenummer: PCT/EP2009/000648
(87) Internationale Veröffentlichungsnummer: WO 2009/098007

(56) Entgegenhaltungen:
- FR-A- 2 543 225
- GB-A- 2 440 344
- US-A- 4 236 866
- SETOGUCHI T ET AL: "A review of impulse turbines for wave energy conversion" RENEWABLE ENERGY, PERGAMON PRESS, OXFORD, GB, Bd. 23, Nr. 2, 1. Juni 2001 (2001-06-01), Seiten 261-292, XP002460979 ISSN: 0960-1481

## Beschreibung

Die Erfindung betrifft eine Rotorblattgestaltung für eine Wellsturbine, insbesondere zur Verwendung in einem Wellenkraftwerk.

Wellsturbinen sind bekannt - hierzu wird beispielhaft auf die GB 1574379 A verwiesen. Turbinen dieses Typs sind für eine bidirektionale, im Wesentlichen axiale Anströmung ausgelegt, wobei der Rotor einer Wellsturbine die Umlaufrichtung unabhängig von der Richtung der Anströmung beibehält. Meist umfasst der Rotor eine Nabe mit über den Außenumfang verteilten, nach radial außen weisenden Rotorblättern. Dabei sind die Rotorblätter symmetrisch zur Rotationsebene gestaltet, wobei als Profile im Allgemeinen tropfenförmige Tragflächenprofile Verwendung finden. Ferner werden die Rotorblätter üblicherweise starr angelenkt. Allerdings sind auch Ausgestaltungen mit winkelverstellbaren Rotorblättern bekannt, wobei für diesen Fall die voranstehend genannte Symmetrieebene der Rotorblätter für die Nullstellung in der Rotationsebene liegt.

Ferner offenbart die US 5191225A, die als nächstliegender Stand der Technik angesehen wird, ein Wellenkraftwerk, in dem eine zweistufige Wellsturbine in einem Strömungskanal aufgenommen ist und durch eine bidirektionale Luftströmung angetrieben wird. In einem Wellenkraftkraftwerk dieser Bauart wird Energie aus einer oszillierenden Wassersäule gewonnen. Hierzu ist eine Wellenkammer vorgesehen, die eine unter dem Wasserspiegel liegende Zuströmungsöffnung aufweist. Brandet eine Welle gegen die Außenwandung der Wellenkammer, so erfolgt ein Zustrom von Meerwasser in das Innere der Kammer, wodurch sich der Wasserspiegel in der Kammer anhebt. Entsprechend wird bei einer auslaufenden Welle der Wasserspiegel absinken, sodass sich eine Oszillationsbewegung der Wassersäule in der Wellenkammer ergibt, die annähernd der Wellenfrequenz entspricht. Oberhalb des Wasserspiegels ist in der Wellenkammer eine Luftmasse eingeschlossen, die durch einen begrenzten Belüftungskanal mit der Umgebungsatmosphäre in Verbindung steht. Entsprechend zur Oszillationsbewegung des Wasserkörpers in der Wellenkammer wird die darüber befindliche Luftmasse einer Druckschwankung unterliegen, sodass zum Druckausgleich im Belüftungskanal eine ständig wechselnde, bidirektionale Luftströmung hoher Geschwindigkeit entsteht, die zur Gewinnung elektrischer Energie verwendet werden kann.

Ein möglicher Profilverlauf für die Rotorblätter einer Wellsturbine ist durch die vierstellige NACA Reihe gegeben. So beschreibt das NACA 0012-Profil eine Profilkontur mit einer Dicke von 12 % bezogen auf die Sehnenlänge. Dabei verläuft die Profilsehne und damit die Symmetrielinie des Profils parallel zur Rotationsebene der Turbine. Beim Betrieb der Wellsturbine liegt ein effektiver Anströmungswinkel gegen das Profil der jeweiligen Turbinenblätter vor, der sich durch die Vektoraddition der Umlaufgeschwindigkeit und der Anströmungsgeschwindigkeit der antreibenden Luftströmung ergibt. Typischerweise sind die Anströmungswinkel klein, sodass das symmetrische Profil im Sinne eines Tragflügels wirkt und die am aerodynamischen Zentrum angreifenden Kräfte eine Teilkomponente in Tangentialrichtung in Bezug auf die Nabe der Wellsturbine aufweisen, die dem Vortrieb dient. Die weiteren aerodynamischen Kräfte senkrecht zu dieser Tangentialrichtung sind über die Turbinenlager aufzufangen.

Für Wellsturbinen ergibt sich, neben der Problematik einer hohen Geräuschemission und dem schlechten Anlaufverhalten, die Schwierigkeit, dass mit zunehmendem Anströmungswinkel, typischerweise ab 13°, an den Turbinenblättern ein Strömungsabriss erfolgen kann. Ein solchermaßen großer Anströmungswinkel kann für große Durchflusskoeffizienten auftreten, wenn aufgrund eines stark variierenden Luftstroms eine schnelle Zunahme der Anströmungsgeschwindigkeit vorliegt und der Anstieg der Umfangsgeschwindigkeit der Wellsturbine nicht schnell genug erfolgt, beziehungsweise diese bereits auf ihrer Nenndrehzahl läuft.

Der Erfindung liegt die Aufgabe zugrunde, eine Wellsturbine so zu gestalten, dass der Arbeitsbereich erweitert wird und ein Abriss der Strömung an den Rotorblättern zu höheren Durchflusskoeffizienten hin verschoben ist. Ferner soll sich die Wellsturbine durch konstruktive und fertigungstechnische Einfachheit und einen hohen Wirkungsgrad auszeichnen.

Die Erfindung wird durch die Merkmale des unabhängigen Anspruchs gelöst. Vorteilhafte Ausgestaltungen ergeben sich aus den Unteransprüchen.

Die Erfinder haben erkannt, dass eine Rotorblattgeometrie, für die Auffädellinie der Profilschnitte in der Rotationsebene gegenüber Radialrichtung gekrümmt ist, einen Strömungsabriss im Fall hoher Durchflusskoeffizienten hinauszögert und damit den Betriebsbereich der Wellsturbine vergrößert. Dies betrifft im Wesentlichen Ausgestaltungen mit einer Auffädellinie, die gegenüber dem Radialstrahl wenigstens in Teilbereichen in Umlaufrichtung vorlaufen.

Für eine Ausgestaltung einer gekrümmten Rotorblattgeometrie mit einem Nachlauf zum Radialstrahl kann für einen Betriebsbereich, für den eine Strömungsablösung nur lokal im nabennahen Bereich und nicht über einen wesentlichen Teil der radialen Erstreckung des Rotorblatts vorliegt, der Gesamtwirkungsgrad erhöht werden. Dieser Umstand folgt aus einer durch die Rotorblattgeometrie bedingten Strömungskonzentration in Verbindung mit einer Geschwindigkeitserhöhung der Anströmung in den radial äußeren Bereichen des Rotorblatts. Aufgrund des längeren Hebelarms der äußeren Rotorblattbereiche wird eine insgesamt höhere Leistung aus der Strömung entnommen. Des Weiteren werden mit der erfindungsgemäßen Rotorblattgeometrie, insbesondere bei der Wahl einer wenigstens in Teilabschnitten gekrümmten Auffädellinie, die Verluste verringert, die bei herkömmlichen Rotorblättern durch akustische Effekte entstehen.

Für eine erste, erfindungsgemäße Ausgestaltungsvariante der Rotorblätter liegt wenigstens in Teilbereichen der Längserstreckung der Auffädellinie eine Krümmung relativ zum Radialstrahl vor. Dabei wird eine Winkelabweichung gegenüber dem Radialstrahl von wenigstens 5° bevorzugt. Für eine alternative Ausgestaltung ist der Verlauf der Auffädellinie eines Rotorblatts so gekrümmt, dass eine sichelförmige Blattgeometrie entsteht. Für diesen Fall wird für die Mindestabweichung einer sichelförmigen Auffädellinie vom Radialstrahl ein Vor- oder Nachlauf der Rotorblattspitze von wenigstens 5° zum Radialstrahl bevorzugt.

Vorliegend wird unter dem Begriff "Radialstrahl" eine Gerade verstanden, die in der Rotationsebene der Wellsturbine liegt und die von der Drehachse der Wellsturbine ausgehend radial durch den Fußpunkt des zugeordneten Rotorblatts verläuft. Der Fußpunkt wird als Schnitt der Auffädellinie mit der Tragstruktur, gewöhnlich der Nabe der Wellsturbine, festgelegt. Dabei ist der Begriff einer Auffädellinie vorliegend so definiert, dass diese durch die Verbindungslinie charakteristischer Punkte der Profilschnitte entsteht. Dies kann beispielsweise der Schnittpunkt der Skelettlinie mit der Mittenlinie eines Profilschnitts oder ein Punkt auf der Skelettlinie für eine vorgegebene Profiltiefe, etwa bei einem Viertel der Profiltiefe, sein. Im letztgenannten Fall ist der charakteristische Punkt der Angriffspunkt der aerodynamischen Kräfte für den jeweiligen Profilschnitt. Unabhängig von der im Einzelfall getroffenen Wahl zur Festlegung der Auffädellinie soll für eine erfindungsgemäße Rotorblattgeometrie gelten, dass durch die Krümmung eine Abweichung zum Verlauf des Radialstrahls in der Rotationsebene vorliegt.

Ein weiterer Vorteil, der sich neben der Strömungsstabilisierung für eine erfindungsgemäße Rotorblattgeometrie ergibt, ist in der verringerten Geräuschemission zu sehen. Dabei zeichnen sich insbesondere sichelförmige Gestaltungen der Rotorblätter durch eine verminderte Lärmerzeugung aus. Weitere akustische Verbesserungen können durch eine Symmetriebrechung in Umfangsrichtung bewirkt werden. Für die erfindungsgemäße Geometrie kann beispielsweise eine Variation der radiusabhängigen Abweichung der Auffädellinie vom Radialstrahl für aufeinander folgende Rotorblätter gewählt sein.

Ferner erlaubt eine Krümmung der Auffädellinie gegenüber dem Radialstrahl den Vorstau- oder Nachlaufbereich um feststehende Strömungshindernisse, wie Streben oder Leitbleche, über einen weiteren Drehwinkelbereich der Wellsturbine zu durchqueren, sodass die Entstehung von Druckpulsen an den Rotorblättern verringert wird.

Nachfolgend wird die Erfindung anhand von Ausführungsbeispielen und im Zusammenhang mit Figurendarstellungen genauer erläutert. Diese zeigen im Einzelnen Folgendes:
- Figur 1: zeigt in einer Draufsicht auf die Rotationsebene einer Wellsturbine eine Ausgestaltung der Erfindung mit in Sichelform verlaufenden Rotorblättern.
- Figur 2: zeigt die Anströmungsverhältnisse im Fall einer Strömungsablösung für ein dem Stand der Technik entsprechendes Rotorblatt mit Radialstrahlgeometrie.
- Figuren 3a und 3b: zeigen die Anströmung des in Figur 2 gezeigten Rotorblatts für die Radien r₁ und r₃.
- Figur 4: zeigt die Strömungsablösung im Fall eines erfindungsgemäßen Rotorblatts mit einer in Umlaufsrichtung der Wellsturbine gegenüber dem Radialstrahl in Umlaufrichtung gekrümmten Auffädellinie.
- Figur 5: zeigt die Anströmungsverhältnisse für einen Durchflusskoeffizienten, für den noch keine großflächige Strömungsablösung vorliegt im Fall einer erfindungsgemäßen Rotorblattgeometrie mit einer gegenüber dem Radialstrahl nachlaufenden Auffädellinie.
- Figur 6: zeigt eine weitere Gestaltungsvariante eines erfindungsgemäßen Rotorblatts mit einer sichelförmig zurückspringenden Auffädellinie.
- Figur 7: zeigt eine alternative Gestaltung eines erfindungsgemäßen Rotorblatts mit einer sichelförmig vorspringenden Auffädellinie.

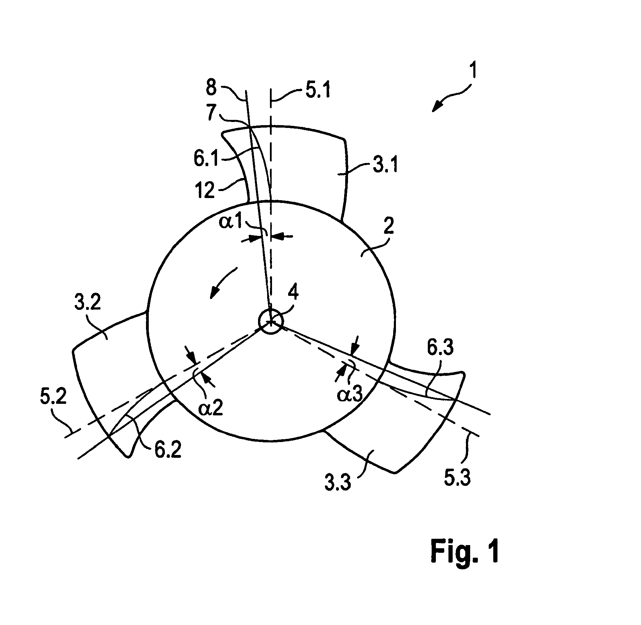

Figur 1 zeigt eine Draufsicht in Axialrichtung auf eine erfindungsgemäß gestaltete Wellsturbine 1. Skizziert ist eine Nabe 2 mit einer exemplarischen Anordnung von drei Rotorblättern 3.1, 3.2 und 3.3. Diese sind äquidistant, d.h. mit einem Winkelabstand von 120°, über den Umfang der Nabe 2 verteilt. Für jedes der Rotorblätter 3.1, 3.2, 3.3 ist ein von der Drehachse 4 der Nabe 2 ausgehender Radialstrahl 5.1, 5.2, 5.3 dargestellt. Dieser stellt eine in radialer Richtung weisende Gerade dar, die durch den jeweiligen Fußpunkt des Rotorblatts 3.1, 3.2, 3.3 läuft. Als Fußpunkt ist für den unmittelbar an die Nabe 2 angrenzenden Profilschnitt der Punkt bei einem Viertel der Profiltiefe auf der Profilsehne festgelegt.

Erfindungsgemäß ist die Geometrie der Rotorblätter 3.1, 3.2, 3.3 so gewählt, dass die Auffädellinie 6.1, 6.2, 6.3 wenigstens in Teilabschnitten vom Verlauf des Radialstrahls 5.1, 5.2, 5.3 aufgrund der Krümmung abweicht. Unter der Auffädellinie wird die Verbindung definierter Punkte der Profilschnitte verstanden. Vorliegend ist dies der Punkt auf der Profilsehne bei einem Viertel der Profiltiefe. Dabei kann eine Auffädellinie aus anderen charakteristischen Punkten des Profils zusammengesetzt werden, beispielsweise dem Schnitt der Mittenlinie mit der Skelettlinie. Für diesen Fall wird zur Festlegung des Radialstrahls der Fußpunkt des an die Nabe angrenzenden Profilschnitts entsprechend gewählt. Die erfindungsgemäße Rotorblattgeometrie zeichnet sich dadurch aus, dass für jede mögliche Wahl der Auffädellinie diese wenigstens in Teilabschnitten entlang ihrer Radialerstreckung vom Radialstrahl abweicht. Im Allgemeinen ist diese Abweichung eine radiusabhängige Funktion.

Für die in Figur 1 skizzierte Ausgestaltung erfolgt die Abweichung vom Radialstrahl in Form einer gekrümmten Auffädellinie, sodass sichelförmige Rotorblattgeometrien entstehen. Für die gezeigte Variante weist die Sichelung in Richtung des Umlaufs der Wellsturbine. Demnach liegt an der radial äußeren Kante des Rotorblatts der Punkt der größten Radialstrahlabweichung 7 zur Auffädellinie 6.1, 6.2, 6.3, wobei für die dargestellte Gestaltung ein Vorlauf vorliegt.

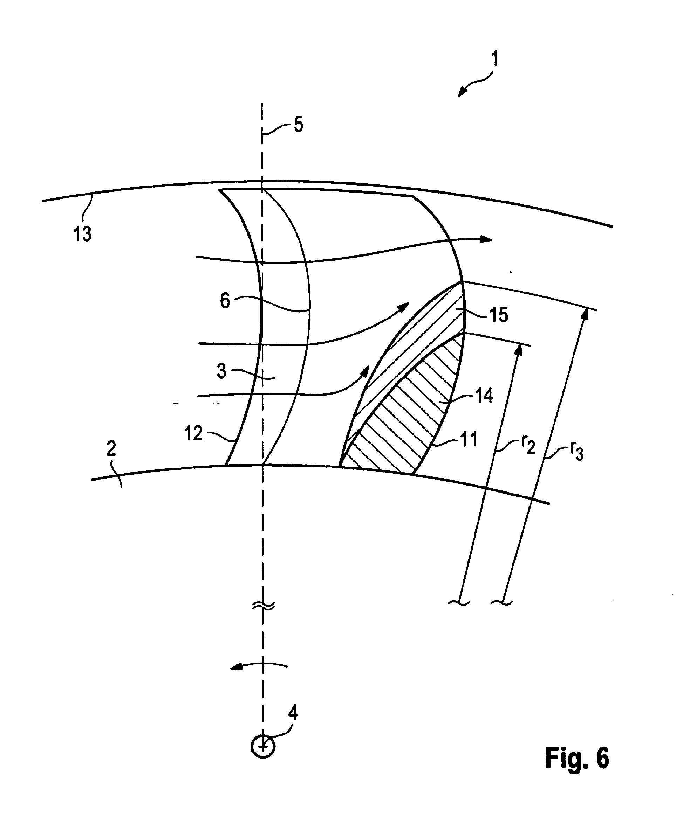

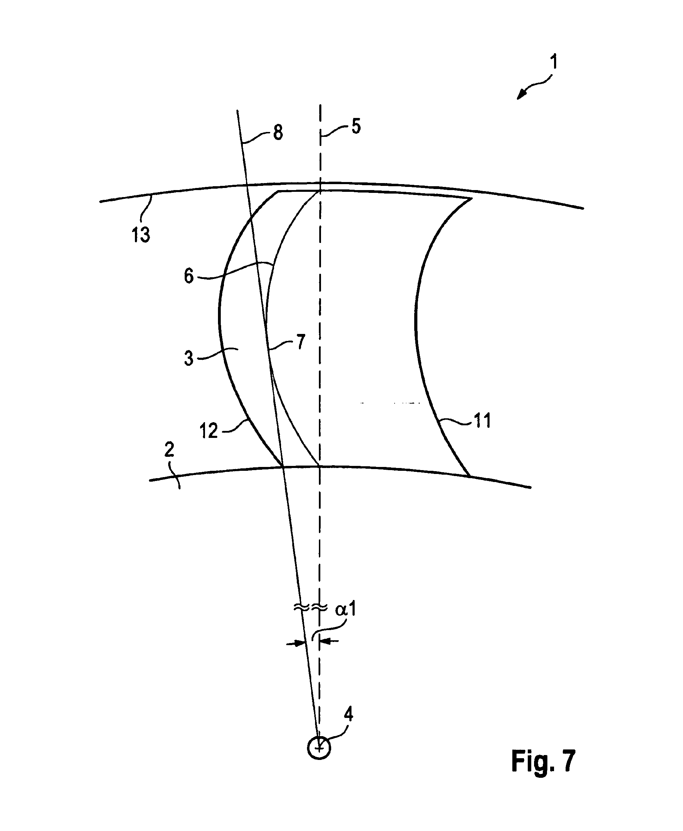

Zwischen der radial verlaufenden Gerade durch den Punkt der größten Radialstrahlabweichung 8 und dem Radialstrahl 5.1, 5.2, 5.3 kann für das jeweilige Rotorblatt 3.1, 3.2, 3.3 eine Winkelabweichung α1, α2, α3 ermittelt werden. Die Winkelabweichungen α1, α2, α3 müssen nicht notwendigerweise übereinstimmen. Dabei ist es möglich, dass die Auffädellinie in der Rotationsebene dem Radialstrahl 5.1, 5.2, 5.3 vorausläuft und somit in Vorwärtsrichtung eine Krümmung erzeugt. Alternativ kann auch ein Nachlauf, d.h. eine Krümmung entgegen der Rotationsrichtung vorliegen. Im Hinblick auf eine Geräuschverminderung sind Rotorblattgeometrien mit einem Vorlauf oder einem Nachlauf zum Radialstrahl 5.1, 5.2, 5.3 vorteilhaft. Des Weiteren ist es denkbar, einen gesichelten Verlauf der Auffädellinie 6.1, 6.2, 6.3 zu wählen, die im radial äußersten Punkt des Rotorblatts 3.1, 3.2, 3.3 wieder zum Radialstrahl 5.1, 5.2, 5.3 zurückführt. Eine solche Ausgestaltung wird später anhand der Figuren 6 und 7 exemplarisch dargestellt.

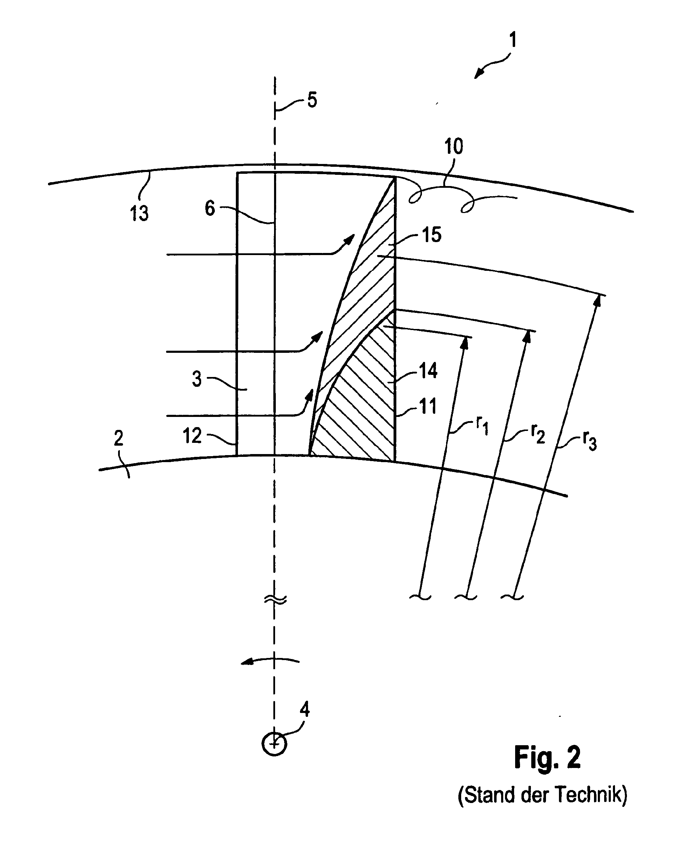

Aus den Figuren 2 bis 4 ist der Vorteil ersichtlich, der sich aus der erfindungsgemäßen Gestalt der Rotorblätter im Hinblick auf eine Strömungsablösung ergibt. Gezeigt ist der Fall eines hohen Durchflusskoeffizienten und damit einer hohen axialen Geschwindigkeit der antreibenden Strömung gegenüber der Umfangsgeschwindigkeit der Rotorblätter.

In Figur 2, die ein dem Stand der Technik entsprechendes Rotorblatt 3 mit Radialstrahlgeometrie darstellt, ist ein erster Bereich 14 skizziert, in dem eine Strömungsablösung auftritt. Dieser erste Bereich 14 liegt nabennah und reicht an der Hinterkante 11 des Rotorblatts 3 bis zum Radius r₂.

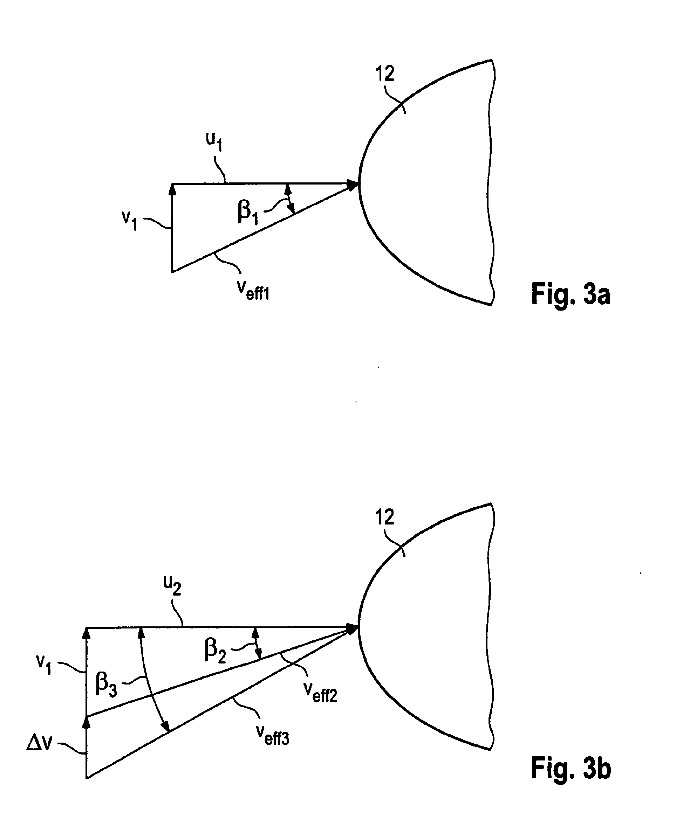

In den Figuren 3a und 3b sind exemplarisch die Anströmungsverhältnisse für die Radien r₁ und r₃ aus Figur 2 jeweils an der Profilnase 12 dargestellt. Für den Radius r₁ zeigt Figur 3a die vektorielle Geschwindigkeitsaddition aus einer ersten Umlaufgeschwindigkeit u₁ und Anströmungsgeschwindigkeit v₁, die zu einer ersten effektiven Anströmungsgeschwindigkeit Veff₁ mit einem ersten Anstellwinkel β₁ führt. Dieser erste Anstellwinkel β₁ übersteigt einen kritischen Wert, sodass eine Strömungsablösung an einem bestimmten Punkt der Strömung entlang des Profils resultiert. Im Vergleich hierzu ist in Figur 3b, welche die Anströmungsverhältnisse für den Radius r₃ verdeutlicht, die zweite effektive Anströmungsgeschwindigkeit v_{eff2} gezeigt, die aus der Vektoraddition der Anströmungsgeschwindigkeit v₁ und der gegenüber dem Radius r₁ höheren zweiten Umlaufgeschwindigkeit u₂ resultiert. Entsprechend entsteht ein zweiter Anstellwinkel β₂, der kleiner ist als der erste Anstellwinkel β₁ und der den kritischen Anstellwinkel, für den Strömungsablösung auftritt, unterschreitet. Allerdings tritt aufgrund der Ablösung im ersten Bereich 14 eine Blockade der radial inneren Anströmung des Rotorblatts 3 auf, sodass entsprechend der in Figur 2 skizzierten Strömungsumlenkung radial nach außen gerichtete Strömungsanteile vorliegen, die die ursprüngliche Anströmungsgeschwindigkeit im Bereich des Radius r₃ um den Betrag Δv erhöhen. Gemäß Figur 3b führt diese Zunahme der Anströmungsgeschwindigkeit zu einer dritten effektiven Anströmungsgeschwindigkeit v_{eff3} mit einem zugehörigen dritten Anströmungswinkel β₃, der wiederum oberhalb der Schwelle der Ablösung liegt.

Demnach folgt, dass für die in Figur 2 gezeigten Verhältnisse auch in einem zweiten Bereich 15 ein Strömungsabriss vorliegt. Entsprechend zieht sich der Strömungsabriss im Wesentlichen über die gesamte radiale Erstreckung des Rotorblatts 3 und reicht bis zu dessen radial äußeren Bereichen, die an die Wandung 13 des Strömungskanals angrenzen. Als Folge wird der Wirkungsgrad stark abfallen.

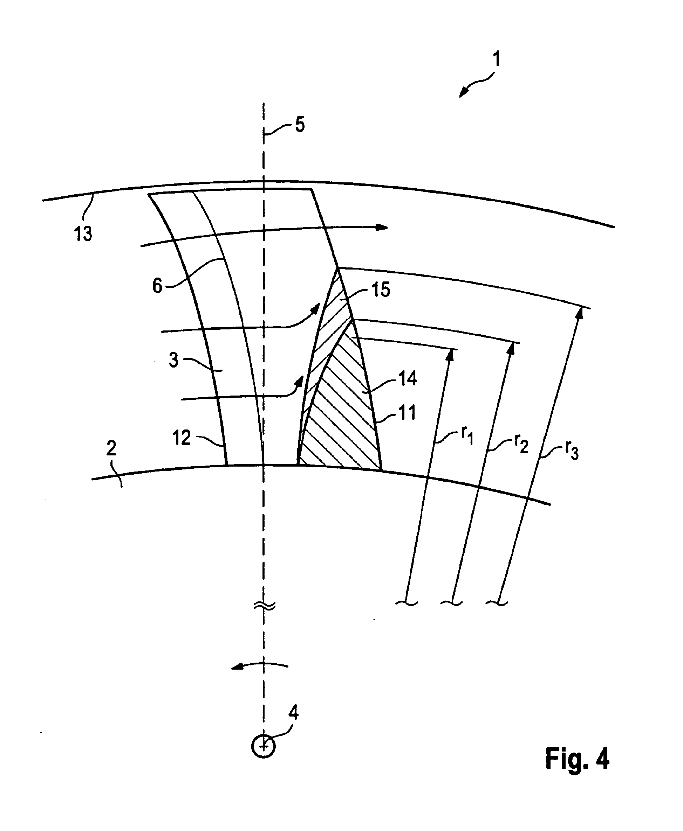

Nachfolgend wird anhand von Figur 4 erläutert, dass mit einer erfindungsgemäßen Rotorblattgeometrie, die eine Krümmung mit Vorlauf der Auffädellinie zum Radialstrahl aufweist, die Ablösungsschwelle zu größeren Durchflusskoeffizienten hin verschoben werden kann. Dargestellt sind wiederum der erste Radius r₁, der zweite Radius r₂ und der dritte Radius r₃, die in Entsprechung zu Figur 2 gewählt sind. Angenommen wird, dass der Radius r₂ den ersten Bereich 14 mit der initialen Strömungsablösung nach radial außen begrenzt. Aufgrund der Strömungsablösung im ersten Bereich 14, erfolgt, wie voranstehend dargelegt, eine Blockadewirkung und eine Strömungsverdrängung nach radial außen. Allerdings ergibt sich aufgrund des Vorlaufs der Auffädellinie des Rotorblatts 3 und der folglich vorwärts geneigten Hinterkante 11 ein kleiner Bereich auf dem Rotorblatt 3, für den die Anströmungsgeschwindigkeit durch diesen Effekt zunimmt. Damit reduziert sich die radiale Erstreckung des zweiten Bereichs 15, in dem durch die Strömungsumlenkung ein Strömungsabriss bewirkt wird, im Vergleich zu einem Radialstrahlrotor. Wesentlich für die Ausweitung des zur Verfügung stehenden Betriebsbereichs ist, dass die erfindungsgemäße Rotorblattgeometrie im Vergleich zu einer Radialstrahlgeometrie für den in Figur 4 skizzierten Betriebsbereich noch nicht zu einer sich über den gesamten Radius erstreckenden Vollablösung der Strömung führt.

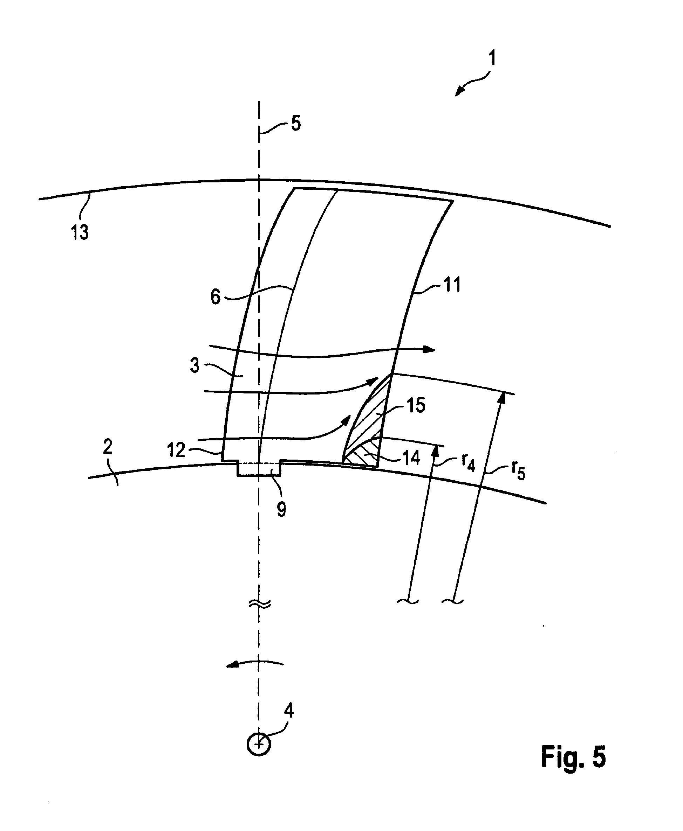

Entsprechend der vorangehenden Darlegung führt eine Krümmung der Auffädellinie 6 relativ vom Radialstrahl 5, die bezüglich der Umlaufrichtung zu einem Nachlauf der Auffädellinie 6 führt, zu einer Verstärkung der Strömungsablösung. Allerdings kann auch eine solche Abweichung von der Radialstrahlgeometrie in bestimmten Betriebsbereichen vorteilhaft sein, sodass Wellsturbinen, für die aufgrund der Anlagenkonfiguration die Problematik eines vollständigen Strömungsabrisses ausgeschlossen werden kann, im Umkehrschluss über alle Betriebspunkte gemittelt einen höheren Wirkungsgrad aufweisen. Dieser Umstand ergibt sich aus einer Wirkungsgraderhöhung bei Durchflusskoeffizienten, für die keine über die volle radiale Erstreckung reichende Strömungsablösung vorliegt - ein solcher Betriebspunkt ist in Figur 5 skizziert.

In Figur 5 ist ein Ausführungsbeispiel mit einem Nachlauf der gekrümmten Auffädellinie 6 gegenüber dem Radialstrahl 5 dargestellt. Zusätzlich wird von einem Betriebspunkt ausgegangen, für den ein maximaler Durchflusskoeffizient vorliegt, der nur in einem stark lokal begrenzten, nabennahen Bereich zu einem initialen Strömungsabriss führt. Hierzu ist in Figur 5 wiederum der erste Bereich 14 skizziert, der radial außen durch den Radius r₄ begrenzt wird. Aufgrund der Blockadewirkung und der hieraus resultierenden radialen Strömungsablenkung tritt zusätzlich in einem zweiten Bereich 15, der durch den Radius r₅ nach radial außen begrenzt ist, eine Strömungsablösung auf. Aufgrund der erfindungsgemäßen Abweichung der Auffädellinie 6 vom Radialstrahl 5 erstreckt sich sowohl der erste Bereich 14 als auch der zweite Bereich 15 gegenüber einer Radialstrahlgeometrie weiter in Radialrichtung. Demnach weicht die Strömung aufgrund der Blockadewirkung durch den Strömungsabriss weiter nach radial außen aus und vergrößert das antreibende Moment auf größeren Radien des Rotorblatts und damit in den Bereichen des größeren Hebels, mit der Folge einer höheren Leistungsaufnahme. Dies führt zu einem verbesserten Wirkungsgrad der Wellsturbine.

Die erfindungsgemäße Geometrie für die Rotorblätter einer Wellsturbine kann durch zusätzliche Maßnahmen, die ihrerseits einen Strömungsabriss verzögern, ergänzt werden. Hierbei kommen Rauheiten auf der Oberfläche der Rotorblätter in Betracht, die Einfluss auf die Strömungsgrenzschicht nehmen und die Bildung von Strömungsablösungen hinauszögern.

Weitere Modifikationen der Erfindung im Rahmen der nachfolgenden Schutzansprüche sind möglich. Eine weitere Maßnahme ist darin zu sehen, die erfindungsgemäße Rotorblattgeometrie mit einem aktiven oder passiven Winkelverstellmechanismus 9 zum Herausdrehen des Rotorblatts aus der Rotationsebene zu versehen. Dieser kann dazu dienen, im Falle hoher Durchflusskoeffizienten die Anstellwinkel für die Anströmung zu verringern und damit einen Strömungsabriss hinauszuzögern. Zusätzlich wird durch diese Maßnahme das Selbstanlaufverhalten der Wellsturbine verbessert. Auch für diese Ausführungsgestaltung wird die Auffädellinie 6 in der Nullstellung des Rotorblatts 3, bei der die Symmetrieebene des Profils in der Rotationsebene liegt, erfindungsgemäß eine Krümmung zum Radialstrahl 5 aufweisen. Dabei kommt sowohl ein Vorlauf als auch eine Nachlauf in Frage.

Figur 6 skizziert ein weiteres Ausgestaltungsbeispiel eines erfindungsgemäßen Rotorblatts 3. Für den vorliegenden Fall liegt eine sichelförmig gekrümmte Auffädellinie 6 vor, die nachlaufend zum Radialstrahl 5 angelegt ist. In Abweichung zu den voranstehend beschriebenen Ausführungen wird die Auffädellinie 6 im radial äußeren Bereich des Rotorblatts 3 wieder zum Radialstrahl zurückgeführt und schneidet diesen an der radial äußersten Erstreckung des Rotorblatts 3.

Durch den Nachlauf der radial inneren Bereiche bis zu einem ersten Schwellwert für den Durchflusskoeffizienten tritt die voranstehend im Zusammenhang mit Figur 5 erläuterte Wirkungsgradsteigerung durch eine Strömungsverdrängung nach radial außen ein. Für höhere Durchflusskoeffizienten wird jedoch die radiale Erstreckung der Strömungsablösung durch ein sukzessives Zurückführen der Auffädellinie 6 des Rotorblatts zum Radialstrahl beschränkt. Entsprechend wird die Hinterkante 11 radial außerhalb des Radius r₂ vorwärtsgekrümmt verlaufen und die Ausdehnung des zweiten Bereichs 15 der sekundären Strömungsablösung begrenzen, sodass die Strömungsablösung nicht vollflächig auftritt.

Ferner zeigt Figur 7 eine Ausgestaltungsaltemative mit einer vorwärtsgekrümmten Sichelung des Auffädellinienverlaufs, wobei die Auffädellinie 6 am radial außen liegenden Ende des Rotorblatts 3 wieder zur Auffädellinie 6 zurückgeführt ist. Für den Punkt der größten Radialstrahlabweichung 7 ist die Winkelabweichung α1 zum Radialstrahl für dieses Ausführungsbeispiel festgelegt, das sich durch eine Geräuschreduzierung auszeichnet. Entsprechend sind die auf akustische Effekte zurückzuführenden Verluste verringert.

Weitere Ausgestaltungen der Erfindung im Rahmen der nachfolgenden Ansprüche sind denkbar. So kann die Abweichung der Auffädellinie 6 vom Radialstrahl 5 nur über eine beschränkte Radialerstreckung des Rotorblatts 3 vorliegen. Bevorzugt wird allerdings, die Auffädellinie 6 über wenigstens ein Drittel ihres Verlaufs nicht deckungsgleich mit dem Radialstrahl 5 auszubilden.

### Bezugszeichenliste

- 1: Wellsturbine
- 2: Nabe
- 3, 3.1, 3.2, 3.3: Rotorblatt
- 4: Drehachse
- 5, 5.1, 5.2, 5.3: Radialstrahl
- 6, 6.1, 6.2, 6.3: Auffädellinie
- 7: Punkt der größten Radialstrahlabweichung
- 8: Gerade durch den Punkt der größten Radialstrahlabweichung
- 9: Blattwinkelverstelleinrichtung
- 10: Blattspitzenwirbel
- 11: Hinterkante
- 12: Profilnase
- 13: Wandung des Strömungskanals
- 14: erster Bereich
- 15: zweiter Bereich
- α1, α2, α3: Winkelabweichung

## Patentansprüche

1. Wellsturbine (1), umfassend
1.1 einen bidirektional, im Wesentlichen axial angeströmten Rotor, der die Umlaufrichtung unabhängig von der Richtung der Anströmung beibehält;
1.2 wobei der Rotor eine Nabe (2) mit über den Außenumgebung verteilt angeordneten und nach radial außen weisenden Rotorblättern (3, 3.1, 3.2, 3.3) umfasst, die symmetrisch zu einer senkrecht zur Drehachse (4) der Nabe (2) stehenden Rotationsebene gestaltet sind und die ein tropfenförmige Profil aufweisen;
**dadurch gekennzeichnet, dass**
1.3 die Rotorblätter (1) eine Auffädellinie (6, 6.1, 6.2, 6.3) aufweisen, deren Verlauf in der Rotationsebene gegenüber einem dem jeweiligen Rotorblatt zugeordneten Radialstrahl (5, 5.1, 5.2, 5.3) wenigstens in Teilen der radialen Erstreckung des Rotorblatts (1) abweicht, wobei die Auffädellinie (6, 6.1, 6.2, 6.3) wenigstens einen gekrümmten Bereich umfasst.

2. Wellsturbine nach Anspruch 1, **dadurch gekennzeichnet, dass** die Vor- oder Rücklage der Auffädellinie (6, 6.1, 6.2, 6.3) an der Rotorblattspitze gegenüber dem Radialstrahl (5, 5.1, 5.2, 5.3) wenigstens 5° beträgt.

3. Wellsturbine nach einem der Ansprüche 1 oder 2, **dadurch gekennzeichnet, dass** die Auffädellinie (6) über wenigstens ein Drittel Ihres Verlaufs nicht deckungsgleich mit dem Radialstrahl (5) ist.

4. Wellsturbine nach einem der vorausgehenden Ansprüche, **dadurch gekennzeichnet, dass** die Auffädellinie (6) im radial äußeren Bereich des Rotorblatts (3) zum Radialstrahl (5, 5.1, 5.2, 5.3) zurückgeführt ist und diesen an der radial äußersten Erstreckung des Rotorblatts (3) schneidet.

5. Wellsturbine nach einem der vorausgehenden Ansprüche, **dadurch gekennzeichnet, dass** das Rotorblatt (3) eine wenigstens in Teilbereichen gegenüber einer Parallele zum Radialstrahl (5, 5.1, 5.2, 5.3) geneigte und/oder gekrümmte Hinterkante (11) umfasst.

6. Wellsturbine nach einem der vorausgehenden Ansprüche, **dadurch gekennzeichnet, dass** die Auffädellinie (6) durch die Punkte festgelegt ist, die für zylindrische Profilschnitte auf der Skelettlinie bei einem Viertel der Profiltiefe liegen.

7. Wellsturbine nach einem der vorausgehenden Ansprüche, **dadurch gekennzeichnet, dass** wenigstens in Teilbereichen auf der Fläche wenigstens eines Rotorblatts (3, 3.1, 3.2, 3.3) die Grenzschichtströmung beeinflussende Unebenheiten vorliegen.

8. Wellenkraftwerk, **dadurch gekennzeichnet, dass** das Wellenkraftwerk wenigstens eine Wellsturbine nach einem der Ansprüche 1 bis 7 umfasst.

9. Wellenkraftwerk nach Anspruch 8, **dadurch gekennzeichnet, dass** im Vorstau- oder Nachlaufbereich zur Wellsturbine feststehende Strömungshindernisse vorliegen.

10. Wellenkraftwerk nach Anspruch 8 oder 9, **dadurch gekennzeichnet, dass** das die Rotorblätter (3, 3.1, 3.2, 3.3) der Wellsturbine In Radialrichtung an die Wandung (13) eines Strömungskanals angrenzen.

## Claims

1. A turbine Wells (1), including
1.1 a bidirectional rotor, subjected to a substantially axial flow, which maintains the rotation direction independently of the direction of incoming flow;
1.2 wherein the rotor contains a hub (2) with rotor blades (3, 3.1, 3.2, 3.3) distributed on the outside facing radially and outwardly, which are arranged symmetrically to a rotation plane perpendicular to the rotational axis (4) of the hub (2) and present a drop-shaped profile;
**characterised in that**
1.3 the rotor blades (1) present a threading line (6, 6.1, 6.2, 6.3), whose run on the rotation plane deviates from a radial beam (5, 5.1, 5.2, 5.3) associated with a matching rotor blade at least in certain portions of the radial extension of the rotor blade (1), wherein the threading line (6, 6.1, 6.2, 6.3) contains at least one curved region.

2. A turbine Wells according to claim 1, **characterised in that** the projection and retraction of the threading line (6, 6.1, 6.2, 6.3) at the rotor blade tip is at least 5° with respect to the radial beam (5, 5.1, 5.2, 5.3).

3. A turbine Wells according to one of the claims 1 or 2, **characterised in that** the threading line (6) is not congruent with the radial beam (5) over at least one third of its run.

4. A turbine Wells according to one of the previous claims, **characterised in that** the threading line (6) is returned to the radial beam (5, 5,1, 5.2, 5.3) in the radially outer region of the rotor blade (3)and intersects said beam on the extension of the rotor blade (3) which is the most external radially.

5. A turbine Wells according to one of the previous claims, **characterised in that** the rotor blade (3) contains a tilted and/or curved rear edge (11) which is parallel to the radial beam (5, 5.1, 5.2, 5.3) in partial regions.

6. A turbine Wells according to one of the previous claims, **characterised in that** the threading line is defined by the points which correspond to one quarter of the profile depth for cylindrical profile sections of the centre line.

7. A turbine Wells according to one of the previous claims, **characterised in that** irregularities influencing the boundary layer flow are present at least in partial regions on the surface of at least one rotor blade (3, 3.1, 3.2, 3.3).

8. A wave power station, **characterised in that** the wave power station contains at least one turbine Wells according to any of the claims 1 to 7.

9. A wave power plant according to claim 8, **characterised in that that** low obstacles are present in the leading and trailing region, which are fixed relative to the turbine Wells.

10. A wave power plant according to claim 8 or 9, **characterised in that** the rotor blades (3, 3.1, 3.2, 3.3) of the turbine Wells barely touch the wall (13) of a flow channel in radial direction.

## Revendications

1. Turbine Wells (1), comprenant,
1.1 un rotor bidirectionnel, sensiblement balayé axialement, qui maintient le sens de circulation indépendamment de la direction de balayage;
1.2 dans laquelle le rotor comprend un moyeu (2) muni de lames de rotor (3, 3.1, 3.2, 3.3) réparties sur l'environnement extérieur et dirigées radialement vers l'extérieur, qui sont agencées de manière symétrique par rapport à un plan de rotation perpendiculaire à l'axe de rotation (4) du moyeu (2) et présentent un profil en forme de goutte;
**caractérisée en ce que**
1.3 les lames de rotor (1) présentent une ligne d'enfilage (6, 6.1, 6.2, 6.3) dont le tracé dans le plan de rotation s'écarte d'un faisceau radial (5, 5.1. 5.2, 5.3) associé à une lame de rotor correspondante, au moins dans certaines parties de l'extension radiale de la lame de rotor (1), tandis que la ligne d'enfilage (6, 6.1, 6.2, 6,3) comprend au moins une zone recourbée.

2. Turbine Wells selon la revendication 1, **caractérisée en ce que** la projection ou rétraction de la ligne d'enfilage (6, 6.1, 6.2, 6.3) au niveau de la pointe de lame de rotor est d'au moins 5° par rapport au faisceau radial (5, 5.1, 5.2, 5.3).

3. Turbine Wells selon l'une des revendications 1 ou 2, **caractérisée en ce que** la ligne d'enfilage (6) n'est pas congruente avec le faisceau radial (5) sur au moins un tiers de son tracé.

4. Turbine Wells selon l'une quelconque des revendications précédentes, **caractérisée en ce que** la ligne d'enfilage (6) est renvoyée au faisceau radial (5, 5,1, 5.2, 5.3) dans la zone radialement externe de la lame de rotor (3) et coupe ledit faisceau au niveau de l'extension radialement la plus externe de la lame de rotor (3).

5. Turbine Wells selon l'une quelconque des revendications précédentes, **caractérisée en ce que** la lame de rotor (3) comprend un bord arrière (11) incliné et/ou recourbé au moins dans des zones partielles par rapport à une parallèle au faisceau radial (5, 5.1, 5,2, 5.3).

6. Turbine Wells selon l'une quelconque des revendications précédentes, **caractérisée en ce que** la ligne d'enfilage (6) est définie par les points correspondant au quart de la profondeur de profil pour les sections de profil cylindriques sur la ligne médiane.

7. Turbine Wells selon l'une quelconque des revendications précédentes, **caractérisée en ce que** des irrégularités influençant l'écoulement de couche limite sont présentes au moins dans des zones partielles à la surface d'au moins une lame de rotor (3, 3.1, 3.2, 3.3).

8. Centrale houlomotrice, **caractérisée en ce que** la centrale houlomotrice comprend au moins une turbine Wells selon l'une quelconque des revendications 1 à 7.

9. Centrale houlomotrice selon la revendication 8, **caractérisée en ce que** des obstacles à l'écoulement fixés à demeure sont présents dans la zone d'attaque ou de fuite de la turbine Wells.

10. Centrale houlomotrice selon la revendication 8 ou 9, **caractérisée en ce que** les lames de rotor (3, 3.1, 3.2, 3.3) de la turbine Wells effleurent la paroi (7.3) d'un canal d'écoulement dans la direction radiale.
